# EUROPEAN PATENT APPLICATION

(11) **EP 2 700 440 A2**
(43) Date of publication of application: **26.02.2014**
(21) Application number: 13181000.4
(22) Date of filing: 20.08.2013
(51) Int. Cl.: B01D 53/14, B01D 53/62, B01D 53/78

(54) **Method and system for CO2 capture from a stream and solvents used therein**

(30) Priority: 24.08.2012 US 201261692936 P; 25.06.2013 US 201313925915
(71) Applicant: Alstom Technology Ltd, 5400 Baden (CH)
(72) Inventor: Bedell, Stephen Alan, Knoxville, TN Tennessee 37934 (US)

(57) **Abstract**

A solvent solution for capture of CO₂ from a stream includes a water soluble polymer comprising an amino group.

## Description

### Cross-Reference to Related Application

This application claims the benefit of U.S. Provisional Patent Application Serial No. 61/692,936; filed on August 24, 2012, entitled "METHOD AND SYSTEM FOR CO2 CAPTURE FROM A STREAM AND SOLVENTS USED THEREIN" which is incorporated herein by reference in its entirety.

### Technical Field

The present disclosure is generally directed to the treatment of a stream for carbon dioxide (CO₂) capture. More particularly, the present disclosure is directed to a system and method of removing CO₂ and other non-CO₂ contaminants present in a stream, and solvents used therein.

### Background

The combustion of a fuel, such as coal, oil, peat, waste, etc., in a combustion plant such as a power plant, generates a hot process gas often referred to as a flue gas. The stream contains particulates and gaseous contaminants such as carbon dioxide (CO₂). The negative environmental effects of releasing CO₂ into the atmosphere have been recognized, and have resulted in the desire for development of processes adapted for removing or reducing the amount of CO₂ from the hot process gas generated in the combustion of the afore-referenced fuels.

Chemical absorption with amines is one such CO₂ capture technology being explored. Amines are useful for CO₂ capture because they can increase the solubility of the CO₂. However, a problem with the use of amines for CO₂ capture involves the buildup of impurities and contaminants in the solution which must be removed. For example, small non-charged degradation products, such as low molecular weight amines, are more volatile than the starting amine and can result in emission issues and/or the need for costly water washing. This is the case because some volatile degradation products cannot be removed by ion exchange or other traditional techniques and are undesirably contained in the exiting gas stream discharged into the atmosphere. Thus, removal or elimination of such unwanted amines from the gas discharged from a plant is desired. Currently, there is a need for an effective way to separate out non-ionic degradation amine products from the solution during CO₂ capture. There are further needs for improved systems and methods of removing CO₂ and other non-CO₂ contaminants present in a stream, as well as alternative solvents for use in such systems and methods.

### Summary

According to aspects illustrated herein, there is provided a solvent solution for capture of CO₂ from a stream, the solvent solution comprising a water soluble polymer containing an amino group.

According to further aspects illustrated herein, there is provided a method for capture of CO₂ from a stream. The method comprises applying a CO₂ lean solvent solution to a CO₂ rich stream in an absorber to provide a CO₂ rich solvent solution and a CO₂ lean stream, the solvent solution comprising a water soluble polymer containing an amino group, wherein the CO₂ rich stream comprises more CO₂ than the CO₂ lean stream.

According to yet further aspects illustrated herein, there is provided a system configured to capture CO₂ from a stream, the system comprising: an absorber configured to receive a CO₂ containing stream and a solvent solution, the solvent solution comprising a water soluble polymer containing an amino group, the CO₂ containing stream and the solvent solution being contacted to remove CO₂ from the stream and form a CO₂ rich solvent solution stream; and a regenerator fluidly coupled to the absorber, wherein the regenerator is configured to receive at least a portion of the CO₂ rich solvent solution stream to remove CO₂ from the CO₂ rich solvent solution stream to form a regenerated solvent to be introduced to the absorber for further absorption and removal of CO₂.

The above described and other features are exemplified by the following figures and in the detailed description.

### Brief Description of the Drawings

Referring now to the figures, which are exemplary embodiments, and wherein the like elements are numbered alike:

FIG. 1 is a schematic depiction of a system for removal of CO₂ from a stream, according to an embodiment as described herein; and

FIG. 2 is a schematic depiction of a system for removal of CO₂ from a stream, according to another embodiment as described herein.

### Detailed Description

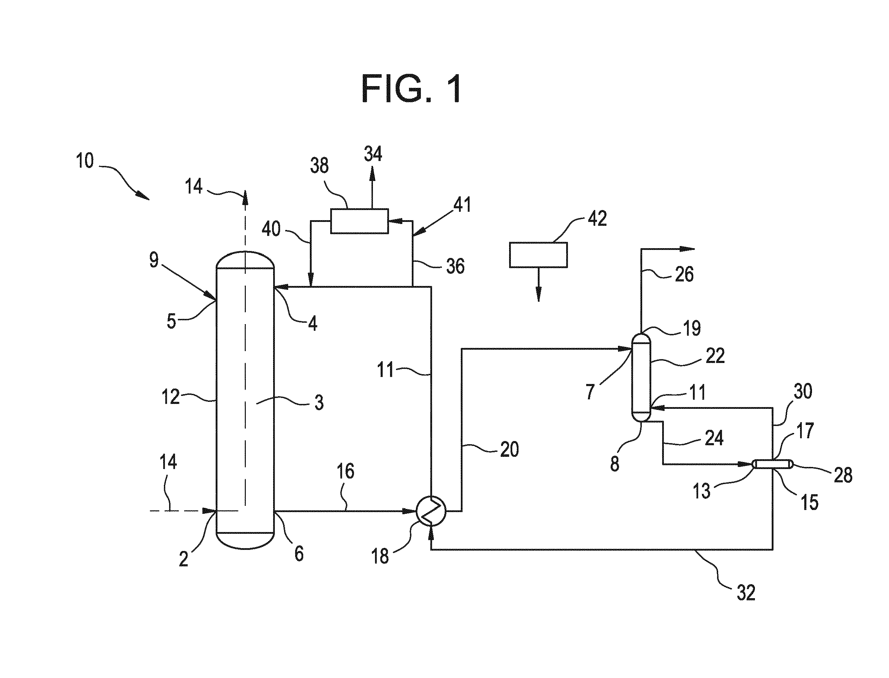

FIG. 1 illustrates an example of a carbon capture system 10 for removal of CO₂ from a stream. The system 10 comprises an absorber 12 (e.g., absorber column) in which a stream 14 is contacted, for example, in a countercurrent mode with a solvent solution 11, which in one embodiment comprises water and a chemical solvent, and is described in further detail below. It is noted that while FIG. 1 sets forth one example of a system for CO₂ capture including various components, such as absorber 12, other components could also be included in the systems described herein.

The stream 14 could be any stream having CO₂ therein, including but not limited to a flue gas stream containing CO₂ or other gas stream containing CO₂ and so forth. The stream 14 is generated by the combustion of a fuel in a boiler (not shown), according to an embodiment. The fuel of stream 14 is any type of fuel capable of combustion. Types of fuel include, but are not limited to coal, peat, waste, oil, gas, and the like. Thus, applications in which embodiments described herein could be associated with include fossil fuel systems, coal power plants, natural gas power plants, oil power plants, and so forth. Combustion of the fuel generates the stream 14, which contains CO₂ contaminants and other non-CO₂ contaminants in both physical and gaseous form. Examples of contaminants present in the stream 14 include, but are not limited to CO₂, and other non-CO₂ contaminants such as sulfur oxides (SOx), nitrogen oxides (NOx), fly ash, dust, soot, mercury, and the like. Thus, it is desirable to treat the stream 14 in system 10 prior to releasing the stream 14 into the atmosphere to reduce the amounts of contamination present therein.

As illustrated in FIG. 1, system 10 includes the absorber 12 defining a first inlet 2 for receiving the stream 14 for treatment in an interior area 3 of the absorber 12 and a second inlet 4 for receiving in the interior area 3 the solvent solution 11. The absorber 12 also includes a third inlet 5 for receiving solvent via line 9 in the illustrated embodiment. The stream 14 enters the first inlet 2 and travels up the length of the absorber 12 where it is contacted with the solvent solution 11. The absorber 12 also defines, e.g., a first outlet 6 for discharging from the interior area 3 treated gas via line 16.

The system 10 further includes a heat exchanger 18, a regenerator 22 and a reboiler 28, as also depicted in FIG. 1, and which are fluidily coupled by way of conduits, channels and the like to the absorber 12. In the illustrated embodiment, the first outlet 6 is in fluid communication with the heat exchanger 18 which receives the treated gas via line 16. The contact between the solvent solution 11 and the stream 14 forms a CO₂ rich solvent solution which flows through line 16 and exits the bottom of the absorber 12 and enters the heat exchanger 18 after which it is passed to a regenerator 22 via line 20.

The regenerator 22 defines a first inlet 7 for receiving the CO₂ rich solvent solution via line 20 and a first outlet 8 for discharge of regenerated solvent (CO₂ lean stream) from, e.g., the bottom of the regenerator 22 via line 24 in the illustrated embodiment. The regenerator 22 also defines a second inlet 11 for receiving generated vapor from the reboiler 28 via line 30 in the illustrated embodiment. The regenerator 22 also defines a second outlet 19 where removed CO₂ and water vapor exits the process at, e.g., the top of the regenerator 22 via line 26. Optionally, in one embodiment, a condenser is arranged at the top of the regenerator 22 to prevent water vapor from leaving the process.

The reboiler 28 defines a first inlet 13 for receiving regenerated solvent from the regenerator 22 via line 24 in the illustrated embodiment. The reboiler 28 also defines a first outlet 17 for passing generated vapor back to the regenerator 22 via the line 30 referenced above, as well as a second outlet 15. The second outlet 15 is in fluid communication with the heat exchanger 18 via line 32 which passes heated solvent back to the heat exchanger 18.

While the various afore-referenced components of system 10 such as, for example, the absorber 12, the regenerator 22 and the reboiler 28 are shown and described as having certain inlets and outlets, it will be appreciated that any number of inlets and/or outlets could be employed at alternative locations. Thus, the system 10 described herein is not limited by the specific depicted locations of the lines, inlets and outlets illustrated herein. Moreover, it will be further appreciated that various pumps, valves and so forth can be employed to facilitate the functioning of the various components of the system 10.

As further illustrated in FIG. 1, the system 10 also includes a controller 42 to assist in automating the system 10 and provide processing instructions such as applied concentrations of the constituents of the flows, as well as flowrates, etc., according to embodiments. The controller 42 is any device that allows a user to enter and retrieve information about system 10 and provide instructions to control aspects of the system 10. For example, the controller 42 can be a computer, such as for example, a tablet, a desktop computer, a laptop, or another handheld device, and can also be a mobile phone, a personal digital assistant, and so forth. The controller 42 is connected wirelessly or through wires to devices in the system 10. It will be appreciated that make-up water, solvent, and so forth are added, as needed, to maintain the desired flows and concentrations and thus the controller 42 could be employed to assist with this operation.

During operation, CO₂ from the stream 14 is absorbed in the solvent of the solvent solution 11. In the illustrated embodiment, the solvent is supplied by the solvent inlet line 9. The solvent contacts the gas within the absorber 12 and reacts with the gas. During such reaction, the solvent absorbs CO₂ from the gas after which the solvent is referred to herein as a CO₂ rich solvent. Used solvent enriched in CO₂ then exits the absorber 12 via the line 16 as a CO₂ rich solvent solution and is passed via the heat exchanger 18 and the line 20 to the regenerator 22. In the regenerator 22, the used solvent is stripped of CO₂ by breaking down the chemical bond between the CO₂ and the solution. Regenerated solvent (CO₂ lean stream) then exits, e.g., the bottom of the regenerator 22 via the line 24. It is noted that the terms "CO₂ lean" and "CO₂ rich" are terms readily employed in the field of carbon capture technology. As used herein, a CO₂ lean stream comprises less CO₂ than a CO₂ rich stream. As one non-limiting particular example, a CO₂ lean stream comprises less than about 5 percent (%) CO₂ and a CO₂ rich stream comprises about 10 % or more of CO₂. Removed CO₂ and water vapor exits the process at, e.g., the top of the regenerator 22 via the line 26.

The regenerated solvent is passed to the reboiler 28 via the line 24. In the reboiler 28, which is typically located at the bottom of the regenerator 22, the regenerated solvent is boiled to generate vapor. In the illustrated embodiment, the vapor is returned to the regenerator 22 via the line 30 to drive the separation of CO₂ from solvent. Additionally, reboiling provides for further CO₂ removal from the regenerated solvent.

Following reboiling, the reboiled and thus heated solvent is passed via the line 32 to the heat exchanger 18 for heat exchanging with the used solvent from the absorber 12. Heat exchanging allows for heat transfer between the solutions, resulting in a cooled reboiled solvent and a heated used solvent. The reboiled and heat exchanged solvent is thereafter passed to the next round of absorption in the absorber 12. Before being fed to the absorber 12, the solvent is optionally cooled to a temperature suitable for absorption. Accordingly, a cooler is arranged near the inlet 4 (not shown), according to one embodiment.

Regarding processing conditions including, for example, flow rates, pressures, temperatures, concentrations of constituents, and so forth, it is noted that these conditions can be readily determined. For example, inlet pressure of the stream 14 is close to atmospheric, possibly increased with blowers to overcome potential pressure drop in the absorber 12. Temperature in the absorber 12 ranges from about 10°C to about 60°C, more specifically from about 35°C to about 55°C. Concentration of the polymer in molarity terms depends on its molecular weight. Total concentration of amino groups is (in gram-equivalents/liter) about 0.5 to about 10, more specifically from about 2 to about 5. Flow rates are selected to provide a rich loading in moles of CO₂ per gram-equivalent of amino group of between about 0.1 and about 0.8, more specifically between about 0.3 and 0.5. This value depends on the vapor equilibrium behavior of the amino polymer chosen, the inlet partial pressure of CO₂, as well as the desired degree of removal.

Embodiments disclosed herein particularly target improved solvents, which can be employed in place of non-polymeric amine solvents including, for example, amine compounds such as monoethanolamine (MEA), diethanolamine (DEA), methyldiethanolamne (MDEA), diisopropylamine (DIPA) and aminoethoxyethanol (diglycolamine) (DGA). As explained above, a problem with the use of some such amines for CO₂ capture involves the buildup of impurities and contaminants in the solution which must be removed. Of particular concern are small non-charged degradation products, such as low molecular weight amines, which are more volatile than the starting amine and result in emission issues and/or the need for costly water washing. For example, during processing with the afore-referenced amine solvents, oxygen (O₂) is absorbed in the solution. The O₂ and heat of processing can degrade the amine into a variety of products, among them smaller non-charged volatile constituents, which may become volatile emissions. As currently there is no effective way to separate out these constituents during processing, according to the inventor, gas streams containing such constituents and, e.g., exiting the absorber are subjected to complex scrubbing techniques and/or costly water washing.

Thus, it has herein been determined how to separate such constituents and thus solve some of the problems associated with volatile emissions. More particularly, solvents and processing have herein been determined which can take advantage of the benefits of amines, e.g., increasing the solubility of CO₂, while also providing separable amine constituents.

More specifically, according to embodiments, it has been determined that the use of a solvent, such as an amine attached to a water soluble polymer backbone, can improve the purity of the stream subsequently released into the environment, as well as alleviate the need for some additional processing (e.g., subsequent complex scrubbing techniques and/or water washing) thereby also improving the efficiency of the process. Thus far, the inventor has determined at least two ways to obtain such an amine attached to a water soluble polymer backbone for use as a solvent in the solvent solution 11 described herein. Firstly, known amines can be polymerized to obtain a water soluble polymer containing an amino group for use as a solvent in solvent solution 11, according to embodiments. It is noted that one or more amino groups is contemplated for use in the embodiments disclosed herein. An example of a commercially available water soluble polymerized amine includes polyethyleneimine (PEI). For instance, PEI-150 is a 33 % aqueous solution of 10,000 molecular weight polyethyleneimine from Virginia Chemicals. However, other water soluble polymerized amines could be employed. For example, direct polymerization of amines could be employed. Also, a copolymer of amine and another compound(s) could be employed and the mixture polymerized, which can represent another class of suitable polymers/constituents for use in embodiments disclosed herein. As a further example, a mixture of amines and epichlorohydrin could be employed.

Secondly, an amine attached to a water soluble polymer backbone is obtained by particular design, according to embodiments, to obtain a water soluble polymer containing an amino group (i.e., one or more amino groups) for use as the solvent in solvent solution 11. For example, regarding the water soluble polymerized amine noted above, PEI, it is noted that this amine contains multiple types of functional groups, some of which are energetically favorable for CO₂ capture and some of which are not be as favorable. Thus, while PEI is advantageous, it also would be desirable to particularly tailor the functional groups of the solvent for CO₂ capture. Accordingly, such tailoring or design of the functional groups can potentially allow more control and consistency in the process as, e.g., the same amine can be tailored to be attached at multiple sites of a desired water soluble polymer backbone, and the sites can thus have the same properties and structure. More particularly, according to embodiments, such a tailored water soluble polymer containing an amino group is obtained by attaching an amine to a water soluble polymer having functional groups thereon which are capable of reacting with the amine, the functional groups being capable of reacting along the backbone of the polymer.

Suitable amines for attachment to/reaction with a water soluble polymer include primary and secondary amines. A primary amine has one of three hydrogen atoms in ammonia replaced by an organic substituent bound to the nitrogen atom. A secondary amine has two organic substituents bound to the nitrogen atom together with one hydrogen atom. It has been further determined that use of tertiary amines are less suitable than use of primary and secondary amine because, for example, the primary and secondary amines will become tertiary amines upon reaction with the water soluble polymer. Thus, suitable amines for reaction with/attachment to the afore-referenced water soluble polymer having functional groups thereon are be generally denoted by, e.g., NH₃, NH₂R₁ and NHR₁R₂; where R₁ and R₂ is selected from, but not limited to, -CH₂CH₂OH, -CH₂CO₂H , -CH₂CH(OH)CH₃, -CH₃, CH₂CH₃ and combinations thereof, and is the same or different. Further examples of suitable amines include, but are not limited to, primary alkyl and secondary alkyl amines in general, methylamine, dimethylamine, ethylamine, diethylamine, monoethanolamine (MEA); diethanolamine (DEA); dimethylamine and secondary cyclic amines such as piperazine and piperidine. Combinations of any of the foregoing could also be employed.

The water soluble polymers to which the afore-referenced amines are attached to include any water soluble polymer having functional groups thereon which are capable of reacting with the amine. For example, the water soluble polymer comprises a functional group such as -CH₂Cl, -CH₂Br , OH, HCH(O)CH₂ (an oxirane group) among other suitable functional groups. Also, in an embodiment, the water soluble polymer comprises a functional group in which a halogen is located, e.g., straight off of the polymer chain, e.g., -CH₂CH(Cl)CH₂-. Thus, for instance, the functional group can be denoted as R₁R₂R₃Cl where any one of R₁, R₂ and R₃ is the polymer backbone and the other R groups include another suitable attachment to the backbone and/or an alkyl group and/or hydrogen. Combinations of the functional groups disclosed herein are also employed, according to embodiments. A particular example of a suitable water soluble polymer having the desired functional group(s) for attachment to the amine is a chlorinated polymer known as Fibrabon 35^{®} from Diamond Shamrock Chemical Company. Another suitable example includes polyvinyl alcohol (PVA), among others.

Attachment of the amine (e.g., amino group) to the water soluble polymer backbone employs any suitable reaction mechanism, either directly or via linkages. For example, mixing/reaction of the constituents under effective reaction conditions is employed, according to embodiments. Additionally, it has been determined that to further optimize energy properties of the solvent, an amine molecule is attached to multiple points on the polymer backbone, according to one embodiment.

The water soluble polymers described herein is branched or unbranched, and of any desired molecular weight. As an example, the water soluble polymer has a mass average molecular weight of about 200 daltons (Da) to about 100,000 Da, specifically from about 1000 to about 50,000, and more specifically from about 5000 Da to about 40,000 Da. The choice of molecular weight of the polymer also involves tailoring of the ultrafiltration process, which is described in further detail below, while maintaining adequate solubility for both the synthesis and operation of the functionalized polymer, according to an embodiment.

It is further noted that the foregoing chemical solvents are used in the solution either individually or in combination, and with or without other co-solvents, additives such as anti-foam agents, buffers, metal salts and the like, as well as corrosion inhibitors. Examples of corrosion inhibitors include, but are not limited to heterocyclic ring compounds selected from the group consisting of thiomopholines, dithianes and thioxanes wherein the carbon members of the thiomopholines, dithianes and thioxanes each have independently H, C₁₋₈ alkyl, C₇₋₁₂ alkaryl, C₆₋₁₀ aryl and/or C₃₋₁₀ cycloalkyl group substituents; a thiourea-amine-formaldehyde polymer and the polymer used in combination with a copper (II) salt; an anion containing vanadium in the plus 4 or 5 valence state; and other known corrosion inhibitors. Examples of co-solvents include organic solvents, such as alcohol. Antioxidants are also employed to reduce the degradation rate, according to an embodiment.

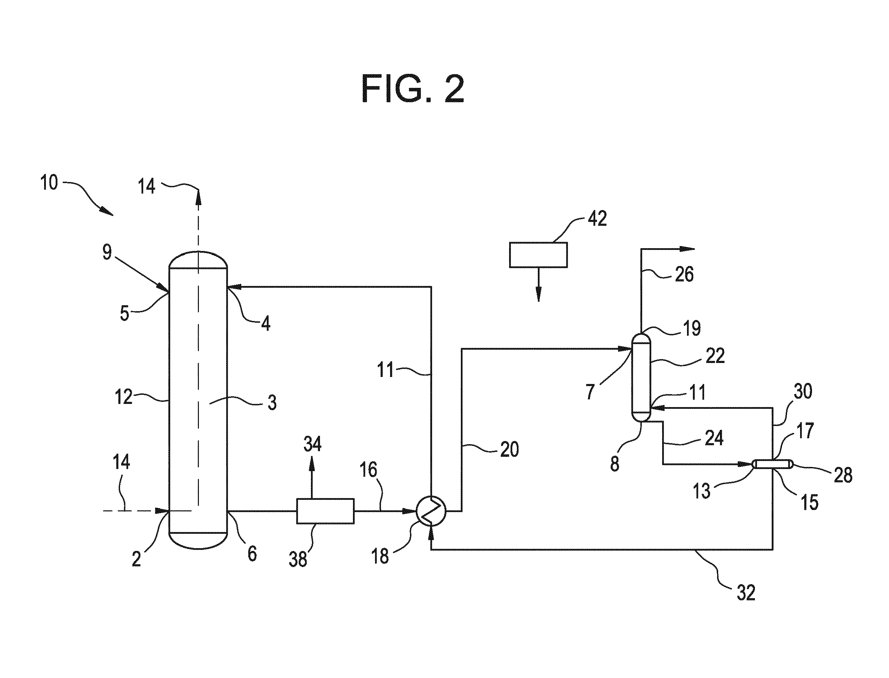

Moreover, while the solvents disclosed herein are described for use generally with the exemplary systems set forth in FIGs. 1 and 2, it is contemplated that other carbon capture systems including additional/alternative components could be employed for processing of these solvents.

In accordance with embodiments, it has further been determined that use of a slip stream of the solvent solution 11 and an ultrafiltration membrane(s) provides even further advantages with respect to, purification and energy efficiency of the process. Referring back to FIG. 1, in the illustrated embodiment a slip stream 36 of the solvent solution 11 is treated by the use of a separator, such as an ultrafiltration membrane 38, allowing low molecular weight impurities to permeate the membrane 38 while retaining the polymeric amine for reuse in the process. More particularly, degradation of the polymer and amino groups thereon over time is possible and thus it is desirable to separate out the degradation constituents from the polymer via the ultrafiltration membrane 38. As one example, the ultrafiltration membrane 38 comprises hollow fibers of desired size functioning as a filter through which water and low molecular weight impurities/amine degradation products can pass through and permeate the filter while retaining the polymer for reuse in the process. The size and type of ultrafiltration membrane 38 is tailored based upon, for example, the average molecular weight of the polymer employed. A waste stream 34 containing the waste constituents is sent to a burner or other processing unit (not shown), according to an embodiment. Stream 40 exiting the ultrafiltration membrane 38 comprising the desired polymeric amine, as shown in FIG. 1, is then be recirculated back to the absorber 12 via entry into the solvent solution line 11.

It is noted that formation of acids from gas impurities and/or amine degradation protonates the amine/polymer and reduce the solvent capacity. Accordingly, it has been further determined that the slip stream 36 of the solvent solution 11 can be treated with a base, e.g., sodium hydroxide (NaOH) or potassium hydroxide (KOH), among other suitiable bases, and the resulting salts allowed to permeate the ultrafiltration membrane 38 while retaining the amine/polymer. FIG. 1 generally depicts the addition of the base via line 41. It is further noted that amount of base employed should be tailored to flow at rate which will be capable of neutralizing the heat stabilized salts built up in the solution. Thus, an effective amount of caustic is added to the slip stream via line 41 to neutralize these salts, according to an embodiment.

While the ultrafiltration membrane 38 is shown in FIG. 1 as being generally located after regeneration processing of the solvent solution, it is noted that other locations of the ultrafiltration membrane 38 are contemplated. For example, as shown in FIG. 2, the ultrafiltration member 38 is located such that the CO₂ rich solvent solution of line 16 enters the ultrafiltration member 38 for processing, as similarly described above with respect to FIG. 1. In this embodiment, it is noted that the ultrafiltration member 38 is positioned not off of a slip stream, as in the case of the embodiment depicted in FIG. 1, but rather is positioned such that the CO₂ rich solvent solution in line 16 can enter the member 38, as shown in FIG. 2. As water, as well as waste impurities/degradation products, are removed, e.g., via waste stream 34, less heat is needed to heat the exiting CO₂ rich solvent solution exiting the ultrafiltration membrane 38 and a more concentrated solvent solution can be regenerated. It is noted that while an ultrafiltration membrane 38 is generally described above, other separators can also be employed. It is further noted that the exemplary systems 10 of FIGs. 1 and 2 are depicted and described the same except for the afore-described positioning and processing regarding the ultrafiltration member 38. Additionally, it is noted that the afore-referenced slip stream configuration and in line configuration could be located anywhere in the system 10, as well as at multiple locations and in combination.

As evident from the foregoing descriptions set forth herein, the present disclosure also includes a method for capture of CO₂ from a stream. The method comprises applying a CO₂ lean solvent solution to a CO₂ rich stream in an absorber to provide a CO₂ rich solvent solution and a CO₂ lean stream, the solvent solution comprising a water soluble polymer containing an amino group, wherein the CO₂ rich stream comprises more CO₂ than the CO₂ lean stream.

Advantages of the systems, processes and solvents disclosed herein include the ability to remove contaminants from a stream such as, for example, a flue gas stream or other gas stream, prior to releasing the gas to the atmosphere, and especially the ability to remove and/or eliminate unwanted amines from the gas.

Moreover, use of the afore-described water soluble polymer containing an amino group as a solvent also can assist in alleviating the need for the use of a catalyst to enhance the kinetics of the CO₂ at lower temperatures. However, a suitable catalyst could be used in conjunction with the polymeric amine to further enhance reaction rates.

Further advantages include the ability to separate out non-ionic degradation amine products from the solution during CO₂ capture from a stream containing CO₂ such as, for example, a flue gas stream or other gas stream. Thus, complex scrubbing and costly water washing of a gas stream exiting from a plant into the atmosphere can be reduced and/or eliminated.

Still further advantages include more thermochemical stability as a result of the removal of unwanted amine degradation products which can alter the thermochemical properties of the system.

While the present invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A solvent solution for capture of CO₂ from a stream, the solvent solution comprising a water soluble polymer containing an amino group.

2. The solvent solution of claim 1, wherein the water soluble polymer comprises a water soluble polymerized amine.

3. The solvent solution of claim 2, wherein the polymerized amine is polyethyleneimine.

4. The solvent solution of claim 1, wherein the water soluble polymer containing an amino group comprises a water soluble polymer having functional groups thereon which are configured to react with an amine, and the amine is a primary amine or a secondary amine.

5. The solvent solution of claim 4, wherein the amine is selected from the group consisting of, primary alkyl amines, secondary alkyl amines, methylamine, monoethanolamine (MEA), diethanolamine (DEA), dimethylamine, secondary cyclic amines, and combinations thereof.

6. The solvent solution of claim 4, wherein the functional groups of the water soluble polymer are selected from the group consisting of -CH₂Cl, -CH₂Br , OH, HCH(O)CH₂, -CH₂CH(Cl)CH₂- and combinations thereof.

7. A method for capture of CO₂ from a stream, the method comprising: applying a CO₂ lean solvent solution to a CO₂ rich stream in an absorber to provide a CO₂ rich solvent solution and a CO₂ lean stream, the solvent solution comprising a water soluble polymer containing an amino group, wherein the CO₂ rich stream comprises more CO₂ than the CO₂ lean stream.

8. The method of claim 7, wherein the water soluble polymer comprises a water soluble polymerized amine.

9. The method of claim 8, wherein the polymerized amine is polyethyleneimine.

10. The method of claim 7, wherein the water soluble polymer containing an amino group comprises a water soluble polymer having functional groups thereon which are configured to react with an amine, and the amine is a primary amine or a secondary amine.

11. The method of claim 10, wherein the amine is selected from the group consisting of, primary alkyl amines, secondary alkyl amines, methylamine, monoethanolamine (MEA), diethanolamine (DEA), dimethylamine, secondary cyclic amines, and combinations thereof.

12. The method of claim 10, wherein the functional groups of the water soluble polymer are selected from the group consisting of -CH₂Cl, -CH₂Br , OH, HCH(O)CH₂, -CH₂CH(Cl)CH₂- and combinations thereof.

13. The method of claim 7, comprising passing a portion of the CO₂ lean solvent solution through an ultrafiltration membrane via a slip stream.

14. The method of claim 7, comprising passing the CO₂ rich solvent solution through an ultrafiltration membrane.

15. A system configured to capture CO₂ from a stream, the system comprising:
an absorber configured to receive a CO₂ containing stream and a solvent solution, the solvent solution comprising a water soluble polymer containing an amino group, the CO₂ containing stream and the solvent solution being contacted to remove CO₂ from the stream and form a CO₂ rich solvent solution stream; and
a regenerator fluidly coupled to the absorber, wherein the regenerator is configured to receive at least a portion of the CO₂ rich solvent solution stream to remove CO₂ from the CO₂ rich solvent solution stream to form a regenerated solvent to be introduced to the absorber for further absorption and removal of CO₂.

16. The system of claim 15, wherein the water soluble polymer comprises a water soluble polymerized amine.

17. The system of claim 15, wherein the water soluble polymer containing an amino group comprises a water soluble polymer having functional groups thereon which are configured to react with an amine, and wherein the amine is a primary amine or a secondary amine.

18. The system of claim 15, further comprising an ultrafiltration membrane through which the solvent solution is passed.

19. The solvent solution of claim 1, wherein the stream is a flue gas stream.

20. The method of claim 7, wherein the stream is a flue gas stream.
